Europäisches Patentamt

(19) European Patent Office

Office européen des brevets

(11) EP 0 647 191 B1

(12) **EUROPÄISCHE PATENTSCHRIFT**

(45) Veröffentlichungstag und Bekanntmachung des Hinweises auf die Patenterteilung:
21.08.1996 Patentblatt 1996/34

(21) Anmeldenummer: 93912633.0

(22) Anmeldetag: 29.06.1993

(51) Int. Cl.$^6$: **B60K 17/08**, F16H 3/08

(86) Internationale Anmeldenummer:
PCT/DE93/00567

(87) Internationale Veröffentlichungsnummer:
WO 94/01301 (20.01.1994 Gazette 1994/03)

(54) **ANTRIEB FÜR MOTORGETRIEBENE STRASSENFAHRZEUGE, INSBES. PKW SOWIE GETRIEBEANORDNUNG FÜR EINEN SOLCHEN ANTRIEB**

TRANSMISSION FOR ENGINE-POWERED ROAD VEHICLES, IN PARTICULAR PASSENGER CARS, PLUS A GEARBOX FOR A TRANSMISSION OF THIS KIND

TRANSMISSION POUR VEHICULES ROUTIERS A MOTEUR, NOTAMMENT POUR VOITURES PARTICULIERES, AINSI QUE BOITE DE VITESSES POUR UNE TELLE TRANSMISSION

(84) Benannte Vertragsstaaten:
AT BE CH DE DK ES FR GB GR IE IT LI LU MC NL PT SE

(30) Priorität: 01.07.1992 DE 4221532
03.07.1992 DE 4221893
04.07.1992 DE 4222035

(43) Veröffentlichungstag der Anmeldung:
12.04.1995 Patentblatt 1995/15

(73) Patentinhaber: BAVARIA-TECH,
WERNER SCHLATTL
D-94034 Passau (DE)

(72) Erfinder: PLÖCHINGER, Ernst
D-8391 Salzweg (DE)

(74) Vertreter: Graf, Helmut, Dipl.-Ing. et al
Postfach 10 08 26
D-93008 Regensburg (DE)

(56) Entgegenhaltungen:
DE-A- 4 109 942      GB-A- 236 873
US-A- 1 719 188      US-A- 2 009 133
US-A- 3 088 488

## Beschreibung

Die Erfindung bezieht sich auf eine Getriebeanordnung gemäß Oberbegriff Patentanspruch 1 sowie auf einen Antrieb gemäß Oberbegriff Patentanspruch 12.

Der Wettbewerb im Kraftfahrzeugbau und insbesondere auch bei der Herstellung von PKW macht eine Fertigung in großer Stückzahl zwingend notwendig. Aus Gründen einer Rationalisierung sind außerdem viele Kraftfahrzeugfirmen, die im Außenverhältnis noch als Wettbewerber auftreten, dazu übergegangen, bei der Entwicklung und Fertigung von Fahrzeugteilen, beispielsweise auch bei der Entwicklung und Fertigung von Antrieben zusammenzuarbeiten. Weitere Einschränkungen der Hersteller von Kraftfahrzeugen in ihrer Angebotspalette ergeben sich durch Gesetze, Vorschriften, Normung, Straßenverhältnisse, Umweltbestimmungen usw.. Die Herstellung von Fahrzeugen, die in technischer Hinsicht an individuelle Ansprüche und Bedürfnisse von Kunden angepaßt sind, ist mit der standardisierten Großfertigung weitestgehend nicht möglich. Andererseits sind Einzelanfertigungen von Kraftfahrzeugen, die individuellen Wünschen gerecht werden könnten, in den meisten Fällen aus Kostengründen nicht realisierbar.

In vielen Fällen besteht aber dennoch der Wunsch nach einem Fahrzeug, welches hinsichtlich seinem Antriebssystems den speziellen Bedürfnissen und Aufgaben, für die das Fahrzeug eingesetzt werden soll, angepaßt ist.

Bekannt sind ein Antrieb für motorgetriebene Straßenfahrzeuge gemäß Oberbegriff Patentanspruch 1 und eine für einen solchen Antrieb bestimmte Getriebeanordnung gemäß Oberbegriff Patentanspruch 12 (US 20 09 133). Dieses bekannte Getriebe ist zusätzlich zu den üblichen bzw. serienmäßigen Schaltgetriebe im Antriebsstrang zwischen Motor und Differentialgetriebe vorgesehen, um eine Übersetzung (Schnellgang) oder Untersetzung (Kriechgang) zu erreichen.

Je nach Verwendung dieses bekannten Zusatzgetriebes sind die dieses Getriebe antreibenden Elemente bzw. die von diesem Getriebe angetriebenen Elemente entsprechend anzupassen.

Geschaltet wird das bekannte Zusatzgetriebe durch eine doppelt wirkende und pneumatisch betätigbare Kolben-Zylinder-Einheit, deren Kolbenstange die Kupplungseinrichtung betätigt.

Aufgabe der Erfindung ist es, einen Antrieb sowie eine Getriebeanordnung aufzuzeigen, mit dem bzw. mit der besonders kostengünstig ein Fahrzeug realisierbar ist, welches hinsichtlich seines Antriebs an die individuellen Bedürfnisse oder Aufgaben angepaßt ist, für die das Fahrzeug eingesetzt werden soll.

Zur Lösung dieser Aufgabe ist ein Getriebe entsprechend dem kennzeichnenden Teil des Patentanspruches 1 sowie ein Antrieb entsprechend dem kennzeichnenden Teil des Patentanspruches 12 ausgebildet.

Die Erfindung zeichnet sich durch eine symmetrische Ausbildung des Zwischengetriebes aus, so daß dessen Antrieb und Abtrieb vertauschbar sind, das Zwischengetriebe also ohne Anpassung der vorausgehenden oder nachfolgenden Elemente es Antriebsstranges wahlweise als Übersetzungsgetriebe oder Untersetzungsgetriebe eingebaut werden kann.

Bei einer bevorzugten Ausführungsform der Erfindung weist das Zwischengetriebe eine Schaltstange oder Schaltwelle auf, die an wenigstens einem Ende, bevorzugt aber an beiden Enden jeweils einen Kolben bildet, der in einem Zylinder einer die Stelleinrichtung bildenden Kolben-Zylindereinheit verschiebbar ist.

Die Erfindung, die insbesondere auch im PKW-Bereich verwendbar ist, hat u.a. auch den Vorteil, daß ein Kraftfahrzeug, welches in der üblichen Großfertigung relativ preiswert hergestellt werden kann, durch den nachträglichen Einbau des Zusatz- bzw. Zwischengetriebes den individuellen Wünschen bzw. Aufgaben problemlos angepaßt werden kann. Das Zwischengetriebe ist hierbei so ausgebildet, daß es vom Fahrersitz aus geschaltet werden kann.

Da das Zwischengetriebe in den Antriebsstrang zwischen dem serienmäßig vorhandenen Fahrgetriebe und dem Differential der angetriebenen Achse vorgesehen wird und außerdem dieses Zwischengetriebe eine Schaltstellung aufweist, der das Übersetzungsverhältnis Eins ist, also einem Durchtrieb entspricht, behält das mit dem Zwischengetriebe ausgestattete Fahrzeug seine durch die serienmäßige Ausbildung festgelegten Eigenschaften bei. Nur in besonderen Situationen, beispielsweise dann, wenn ein besonders hohes Drehmoment an der angetriebenen Achse notwendig ist, wird das Zwischengetriebe in seine zweite Schaltstellung gebracht, d.h. wirksam geschaltet.

Das Zwischengetriebe besitzt zwei Wellen, die jeweils vorzugsweise mit einem Flansch zum Anflansche an weitere, den Antriebsstrang bildende Antriebselemente gestatten, so u.a. an wenigstens eine einen Teil des Antriebsstranges bildende Gelenkwelle. Letztere bildet bevorzugt zusammen mit dem Zwischengetriebe und ggf. einer Drehmomentstütze einen an den jeweiligen Typ des Fahrzeugs angepaßten Einbausatz.

Bevorzugt ist das Zwischengetriebe so ausgebildet, daß es wahlweise als Untersetzungsgetriebe oder als Übersetzungsgetriebe, d.h. gewendet eingebaut werden kann.

Unter serienmäßiges "Fahrgetriebe" ist im Sinne der Erfindung das im Fahrzeug serienmäßig vorgesehene Schaltgetriebe oder automatische Getriebe zu verstehen.

Mit dem Zwischengetriebe kann der serienmäßige Antrieb eines Fahrzeugs an spezielle Verhältnisse angepaßt werden, z.B.
erhöhte Zugkraftbedarf bei Verwendung des Fahrzeugs als Zugfahrzeug für einen Anhänger (z.B. Wohnwagen, Lastenanhänger, usw.);
Anpassung des Fahrzeugs an geänderte Straßenverhältnisse, z.B. an schlechten fahrbaren Zustand, an extreme Steigungen usw.;
Anpassung des Antriebs an spezielle Ländergesetzgebung, z.B. Tempolimit, bei gleichzeitiger Erhöhung der Beschleunigungswerte;
Senkung der Motordrehzahl zur Lärmreduzierung und Verringerung der Schadstoffemissionen;
Steigerung der Spitzengeschwindigkeit.

Weiterbildungen der Erfindung sind Gegenstand der Unteransprüche.

Die Erfindung wird im Folgenden anhand der Figuren an Ausführungsbeispielen näher erläutert. Es zeigen:

Fig. 1      in schematischer Darstellung einen Fahrzeugantrieb gemäß der Erfindung;

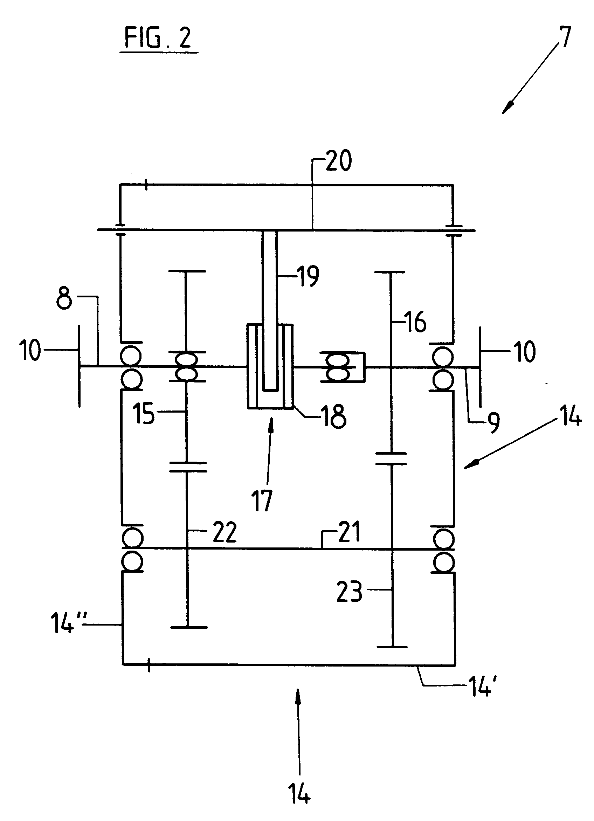

Fig. 2      in vereinfachter Funktionsdarstellung das Zwischengetriebe des Antriebs gemäß Fig. 1;

Fig. 3      in Detaildarstellung die Schaltwelle sowie den Hydraulik-Antrieb für diese Schaltwelle bei einer Ausführungsform des Zwischengetriebes;

Fig. 4      einen Schnitt entsprechend der Linie I-I der Fig. 3;

Fig. 5 und 6      in ähnlicher Darstellung wie Fig. 1 zwei weitere, mögliche Ausführungsformen des Antriebs.

In den Figuren ist 1 der als Verbrennungsmotor ausgebildete Motor eines nicht näher dargestellten Kraftfahrzeugs, nämlich eines PKW. Die Ausgangswelle des Motors ist in üblicher Weise über eine nicht dargestellte Kupplung mit dem Fahr- bzw. Schaltgetriebe 2, welches bei der dargestellten Ausführungsform die beiden Räder 3 der Hinterachse 4 über eine Gelenkwelle 5 und ein Differential 6 antreibt.

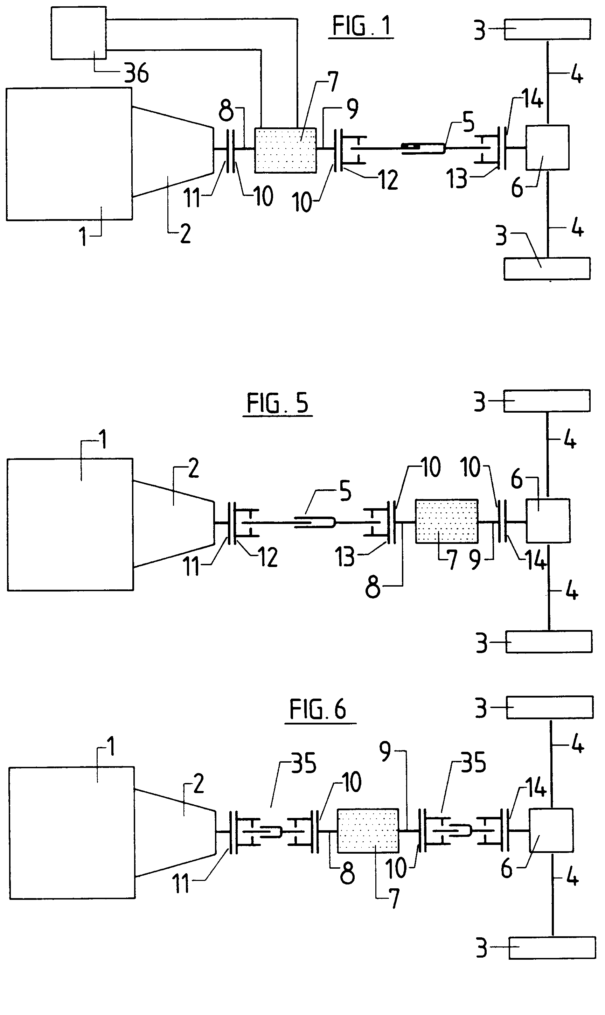

Bei der in der Fig. 1 dargestellten Ausführungsform des PKW-Antriebs ist zwischen dem Ausgang des Schaltgetriebes 2, welches das bei dem PKW werksseitig, d.h. vom PKW-Hersteller eingebaute übliche Mehrgangetriebe ist, und der Gelenkwelle 5 ein Zusatz- bzw. Zwischengetriebe 7 vorgesehen.

Dieses Zwischengetriebe besitzt zwei Wellen 8 und 9, die bei der dargestellten Ausführungsform achsgleich angeordnet sind und jeweils einen Flansch 10 aufweisen, mit welchem die Welle 8 lösbar an einem Flansch 11 der Ausgangswelle des Schaltgetriebes 2 und die Welle 9 ebenfalls lösbar an einem Flansch 12 der Gelenkwelle 5 verbunden ist. Die Gelenkwelle 5 besitzt im Bereich des Flansches 12 eine Kardan-Gelenkanordnung sowie eine weitere Kardan-Gelenkanordnung im Bereich ihres anderen Endes, d.h. im Bereich des dortigen Flansches 13, mit welchem die Gelenkwelle 5 mit der Eingangswelle des Differentials 6 verbunden ist.

Das Zwischengetriebe 7 und die zugehörige Gelenkwelle 5 sind Bestandteil eines Bau- bzw. Nachrüstsatzes, der es gestattet, zur Erhöhung der Zugkraft des PKW anstelle der serienmäßig vorgesehenen, nicht dargestellten Gelenk- oder Kardanwelle, die das Schaltgetriebe 2 direkt mit dem Differential 6 verbindet, das Zwischengetriebe 7 in Serie mit der Gelenkwelle 5 vorzusehen.

Das Zwischengetriebe 7, welches für den nachträglichen Einbau in den Antriebsstrang serienmäßiger Fahrzeuge möglichst klein und kompakt ausgebildet ist, besitzt nur zwei Schaltstellungen, die vom Fahrersitz des Kraftfahrzeugs aus wahlweise geschaltet werden können, und zwar eine Schaltstellung für einen Durchtrieb, bei der die beiden Wellen 7 und 8 unmittelbar miteinander verbunden sind und die Übersetzung i des Zwischengetriebes gleich Eins ist, sowie eine zweite Schaltstellung, bei der das Zwischengetriebe 7 bei seiner in der Fig. 1 dargestellten Montage im Antriebsstrang als Untersetzungsgetriebe wirkt, d.h. die Übersetzung i kleiner als 1 ist. Bei der dargestellten Ausführungsform beträgt die Übersetzung etwa dem halben Stufensprung des serienmäßigen Schaltgetriebes 2 und liegt in der Größenordnung zwischen etwa 0,8 und 0,9.

Das Zwischengetriebe 7, welches bei der dargestellten Ausführungsform als Stirnradgetriebe mit Zwischenwelle 21 aufgebaut ist, besteht im Detail aus dem geschlossenen Gehäuse 14, welches zweiteilig ausgebildet ist und aus dem napfförmigen Gehäuseteil 14' und dem plattenförmigen Gehäuseteil 14" besteht. Im Gehäuse sind die Wellen 8 und 9 drehbar gelagert, wobei diese Wellen miteinander durch eine angestellte Lagerung drehbar verbunden sind und somit eine gemeinsame, allerdings zweiteilige Hauptwelle bilden. Auf der Welle 8 ist ein Zahnrad 15 drehbar gelagert. Ein weiteres Zahnrad 16 ist mit der Welle 9 fest verbunden. Zwischen den beiden Zahnrädern 15 und 16 befindet sich eine Synchronisiereinrichtung 17, die fest mit der Welle 8 verbunden ist und mit der wahlweise das Zahnrad 15 oder das Zahnrad 16 an die Welle 8 ankuppelbar ist. Die Synchronisiereinrichtung 17 besitzt den bei solchen Einrichtungen üblichen Ring 18, in welchen die Schaltgabel 19 eingreift, die an einer Schaltwelle 20 vorgesehen ist. Letztere ist in Richtung ihrer parallel zur gemeinsamen Achse der Wellen 8 und 9 liegenden Achse um einen vorgegebenen Hub im Gehäuse 14 verschiebbar, um die Synchronisiereinrichtung 17 bzw. das Zwischengetriebe zu schalten. Das Aufbringen der Schaltkraft erfolgt durch eine Betätigungs- oder Stelleinrichtung, die beispielsweise eine mechanische Betätigungseinrichtung (Hebelanordnung, Seilzug usw.), eine elektrische Betätigungseinrichtung (z.B. Linearmotor) oder eine pneumatische Betätigungseinrichtung (z.B. Druckluftzylinder) sein kann. Bei der dargestellten Ausführungsform ist die Betätigungseinrichtung ein hydraulischer Antrieb, wie dies nachfolgend noch näher beschrieben wird. Dieser hydraulische Antrieb ermöglicht es, bei kleinen Abmessungen die für das Schalten des Zwischengetriebes 7 notwendigen Kräfte zu erzeugen. Der hydraulische Antrieb gestattet weiterhin auch einen bequemen Einbau des Zwischengetriebes 7 und der Betätigungs- und Steuerelemente für dieses Getriebe.

Im Gehäuse 14, welches beispielsweise aus Aluminiumguß hergestellt ist, ist weiterhin die Zwischenwelle 21 drehbar gelagert, die mit ihrer Achse parallel zu der gemeinsamen Achse der Wellen 8 und 9 liegt und auf der zwei Zahnräder, nämlich das mit dem Zahnrad 15 ständig in Eingriff stehende Zahnrad 22 und das mit dem Zahnrad 16 ständig in Eingriff stehende Zahnrad 23 fest vorgesehen sind.

Ein Vorteil des Zwischengetriebes 7 besteht u.a. auch darin, daß sämtliche Zahnräder 15, 16, 22 und 23 ständig in Eingriff stehen. In der einen Schaltstellung des Zwischengetriebes (bei Durchtrieb) erfolgt die Kraftübertragung direkt von der Welle 8 auf die Welle 9. In der anderen Schaltstellung (Untersetzung), die an sich nur für besondere Fahrbedingungen des Kraftfahrzeuges vorgesehen ist, erfolgt die Kraftübertragung von der Welle 8 über die Zahnräder 15 und 22 auf die Zwischenwelle 21 und von dieser über die Zahnräder 23 und 16 auf die Welle 9. In diesem Fall ergibt sich dann ein Übersetzungsverhältnis $i = n_8/n_9 = z_{15}/z_{22} * z_{23}/z_{16}$.

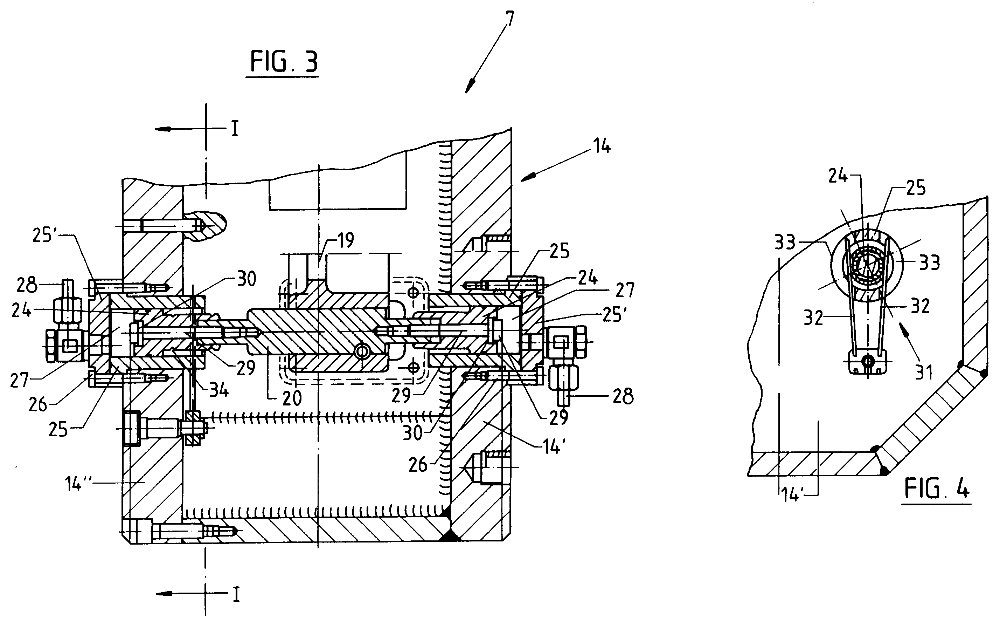

Die Figuren 3 und 4 zeigen mehr im Detail die Schaltwelle 20 und den zugehörigen hydraulischen Antrieb. Weiterhin ist insbes. aus der Fig. 3 die Ausbildung des Gehäuses 14 als zweiteiliges Gehäuse mit dem napfförmigen Gehäuse 14' und dem plattenförmigen Gehäuse 14" ersichtlich.

Ebenso wie die Wellen 8 und 9 und die Zwischenwelle 21 ist auch die Schaltwelle 20, wie oben ausgeführt, im Gehäuse 14 und dabei speziell im Boden des napfartigen Gehäuseteils 14' sowie im plattenförmigen Gehäuseteil 14" gelagert, und zwar die Schaltwelle 20 in der Weise, daß sie beidendig mit einem Kolben 24 versehen ist, der jeweils in einem Zylinder 25 in Achsrichtung der Schaltwelle 20 verschiebbar geführt ist. Der eine Zylinder 25 ist im Boden des napfartigen Gehäuseteiles 14' und der andere Zylinder 25 in dem plattenförmigen Gehäuseteil 14" vorgesehen. Jeder Zylinder 25 ist mit einem Zylinderdeckel 25' versehen, der sich abnehmbar an der Außenseite des Gehäuses befindet. Durch mehrere gemeinsame Schrauben 26 sind der jeweilige Zylinder 25 und der zugehörige Zylinderdeckel 25' am Gehäuse gehalten.

Jeder Zylinder 25 bildet zusammen mit dem zugehörigen Kolben 24 einen Zylinderraum 27, der mit einem Druckmedium, d.h. bei der dargestellten Ausführungsform mit einer unter Druck stehenden hydraulischen Flüssigkeit beaufschlagt werden kann, und zwar jeweils gesteuert über die Hydraulik-Leitung 28. Jeder Kolben 24 ist mit einer achsgleich mit der Achse der Schaltwelle 20 liegenden Schraube 29 an der jeweiligen Stirnseite der Schaltwelle 20 befestigt. Diese Schraube 29 bildet gleichzeitig mit ihrem Kopf, der geringfügig über die den Zylinderraum 27 begrenzende Kolbenfläche des jeweiligen Kolbens 24 wegsteht, einen Anschlag, mit dem der Hub der Schaltwelle 20 in der einen bzw. der anderen Richtung begrenzt ist. Durch Verwendung von Unterleg-Scheiben 30 mit unterschiedlicher Dicke oder durch Verwendung einer unterschiedlichen Anzahl solcher Scheiben 30 kann dieser von dem Kopf der Schraube 29 gebildete Anschlag so eingestellt werden, daß eine optimale Arbeitsweise der Synchronisiereinrichtung 17 in beiden Schaltstellungen erreicht ist, insbes. auch derart, daß in jeder Schaltstellung zwischen der Schaltgabel 19 und dem Ring 18 keine oder im wesentlichen keine axialen Kräfte wirken.

Durch die hydraulische Steuerung ist es möglich, die Schaltwelle 20 in ihren beiden Schalt- bzw. Endstellungen durch die in einen Zylinderraum 27 befindliche hydraulische Flüssigkeit starr zu verriegeln. Bei der dargestellten Ausführungsform ist zusätzlich hierzu im Inneren des Gehäuses 14 ein Federelement 31 vorgesehen, und zwar an dem plattenförmigen Gehäuseteil 14". Dieses Federelement 31 ist gabelartig mit zwei Federarmen 32 aus Federstahl hergestellt. Die Federarme 32 sind mit ihren freien Enden jeweils in einer Nut 33 angeordnet, die an dem dem Zylinderdeckel 25' entfernt liegenden Ende des am Gehäuseteil 14" befestigten Zylinders 25 vorgesehen ist. Die beiden Nuten 33 liegen in einer gemeinsamen Ebene senkrecht zur Achse der Schaltwelle 20 und sind jeweils durchgehend ausgebildet, d.h. sie reichen von der Außenfläche bis in das Innere des Zylinders 25. An dem betreffenden Kolben 24 sind zwei ringförmige Rastnuten 34 vorgesehen, die in Achsrichtung voneinander derart beabstandet sind, daß in der einen Schaltstellung der Schaltwelle die beiden Federarme 32 in die eine Rastnut und in der anderen Schaltstellung die beiden Federarme 32 in die andere Rastnut 34 eingreifen.

Bei einer bevorzugten Ausführungsform weist das Zwischengetriebe 7 folgende technische Daten auf:

Maximales Antriebsmoment:  1 200 Nm
Maximale Antriebsdrehzahl:  8 000 U/min
Übersetzung:  0,88 bzw. 1,0.

Wie oben ausgeführt wurde, ist das Zwischengetriebe 7 für den nachträglichen Einbau in einen Serien-PKW bestimmt, wobei das Zwischengetriebe 7, welches am Gehäuse 14 Befestigungselemente für eine Befestigung am PKW oder an PKW-Teilen aufweist, sowie die Gelenkwelle 5 einen an den betreffenden PKW-Typ angepaßten Bausatz bilden. Grundsätzlich ist es auch möglich, als Gelenkwelle 5 die ursprüngliche Kardanwelle des PKW zu verwenden, und zwar nach entsprechender Kürzung.

Weiterhin kann es zweckmäßig sein, in der Verbindung zwischen dem Schaltgetriebe 2 und der Welle 9 des Zwischengetriebes eine elastische Kupplung vorzusehen.

Zur Abstützung des Differenzmomentes ist es zweckmäßig, eine Drehmomentenstütze zwischen dem Zwischengetriebe 7 und dem serienmäßigen Schaltgetriebe 2 derart vorzusehen, daß auf die Lagerstellen des Schaltgetriebes 2 keine unzulässigen Querkräfte übertragen werden können.

Die Figuren 5 und 6 zeigen weitere, von der Figur 1 abweichende Einbauvarianten des Zwischengetriebes 7. Bei der Variante der Fig. 5 ist die Welle 8 des Zwischengetriebes 7 über die Gelenkwelle 5 mit dem Schaltgetriebe 2 verbunden und die Welle 9 des Zwischengetriebes 7 direkt an die Eingangswelle des Differentials 6 angeflanscht. Bei der Ausführung nach Fig. 6 sind zwei Gelenkwellen 35 verwendet, mit denen das Zwischengetriebe 7 mit dem Schaltgetriebe 2 bzw. mit dem Differential 6 verbunden ist.

Die Bedienung des Zwischengetriebes erfolgt auf besonders einfache Weise. Der Fahrer des PKW betätigt vor einem Schalten des Zwischengetriebes 7 zunächst die serienmäßig vorhandene Kupplung und schaltet dann beispielsweise per Knopfdruck das Zwischengetriebe 7 in die jeweils gewünschte Schaltstufe. Anschließend wird die Kupplung des Fahrzeugs wieder eingerückt. Bei Fahrzeugen mit Automatik-Getrieben kann die Schaltung des Zwischengetriebes 7 bei stehendem Fahrzeug, laufendem Motor und Getriebestellung "N" des Automatik-Getriebes erfolgen.

Die Wartung des Zwischengetriebes ist unproblematisch und beschränkt sich auf eine routinemäßige Ölstand-Kontrolle sowie ggfs. auf einen Schmieröl-Wechsel. Da das Zwischengetriebe 7 für den nachträglichen Einbau möglichst kompakt und klein ausgebildet ist und demnach das Gehäuse 14 nur eine geringe Oberfläche besitzt, kann es für eine ausreichende Kühlung bzw. Abführung von Verlustwärme notwendig sein, eine Schmierölanlage 36 vorzusehen. Diese ist an einer günstigen, leicht zugänglichen Stelle der Karosserie des Fahrzeugs montiert und über Rohr- und Schlauchleitungen mit dem Zwischengetriebe 7 verbunden, dessen Gehäuse 14 außerdem über eine Öleinfüllöffnung und eine Ölablaßöffnung verfügt, die jeweils durch eine Schraube verschlossen sind. Die Schmierölanlage 36 besitzt u.a. ein Ölfilter, eine durch einen Motor angetriebene Ölpumpe sowie einen Ölkühler. Die Verbindung der Schmierölanlage mit dem Zwischengetriebe 7 über die Rohr- und Schlauchleitungen trägt ebenfalls zu einem flexiblen und unproblematischen Einbau des Zwischengetriebes 7 bei. Da die Schmierölanlage 36 an einer leicht zugänglichen Position der Karosserie vorgesehen ist, ist dort auch eine bequeme Kontrolle des Ölstandes des Zwischengetriebes 7 möglich.

Bei den in den Figuren dargestellten Ausführungsformen wird das Zwischengetriebe 6 als Untersetzungsgetriebe verwendet, welches dann wirksam ist, wenn bei besonderen Umständen eine besonders hohe Zugkraft für den PKW notwendig ist, beispielsweise zum Herausziehen eines Bootsanhängers, Wohnwagens oder dergl. Anhänger aus einem schweren Gelände, bei extremen Werkfahrten usw.

Da das Zwischengetriebe 7 nicht nur von seiner Bauform, sondern generell in konstruktiver Hinsicht symmetrisch ausgeführt ist, kann dieses Getriebe auch gewendet eingebaut werden, d.h. derart eingebaut werden, daß die Welle 9 die Antriebswelle und die Welle 8 die Abtriebswelle bilden, das Getriebe also als Übersetzungsgetriebe wirkt. Mit diesem Einbau ist es u.a. möglich, in Fahrsituationen, in denen kein besonders hohes Drehmoment notwendig ist, nicht nur die mögliche Spitzengeschwindigkeit eines PKW zu steigern, sondern insbes. die Motordrehzahl zu reduzieren, womit sich eine wesentliche Lärmreduzierung und Verringerung der Schadstoffemissionen ergeben.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird.

**Aufstellung der verwendeten Bezugsziffern**

| | |
|---|---|
| 1 | Motor |
| 2 | Schaltgetriebe |
| 3 | Räder |
| 4 | Hinterachse |
| 5 | Gelenkwelle |
| 6 | Differential |
| 7 | Zwischengetriebe |
| 8, 9 | Welle |
| 10 - 14 | Flansch |
| 14 | Gehäuse |
| 14', 14" | Gehäuseteil |
| 15, 16 | Zahnrad |
| 17 | Synchronisiereinrichtung |
| 18 | Ring |
| 19 | Schaltgabel |
| 20 | Schaltwelle |
| 21 | Zwischenwelle |
| 22, 23 | Zahnrad |
| 24 | Kolben |
| 25 | Zylinder |
| 25' | Zylinderdeckel |
| 26 | Schraube |
| 27 | Zylinderraum |
| 28 | Hydraulik-Leitung |
| 29 | Schraube |
| 30 | Scheibe |
| 31 | Federelement |
| 32 | Federarm |
| 33 | Nut |
| 34 | Rastnut |
| 35 | Gelenkwelle |
| 36 | Schmierölanlage |

**Patentansprüche**

1. Getriebeanordnung für motorgetriebene Straßenfahrzeuge, insbesondere für PKW, mit einem ein serienmäßiges Fahrgetriebe aufweisenden Antriebsstrang zwischen dem Motor (1) und einem Differentialgetriebe (6) einer angetriebenen Achse (4), wobei die Getriebeanordnung zusätzlich zu einem Fahrgetriebe (2) ein für den nachträglichen Einbau bestimmtes, schaltbares Zwischengetriebe aufweist, welches zwei Wellen (8, 9), die durch eine Lagerung, beispielsweise durch ein Festlager oder eine angestellte Lagerung drehbar miteinander verbunden sind und eine gemeinsame, zweiteilige Hauptwelle bilden, eine Zwischenwelle (21) mit Zahnrädern (22, 23), die mit Zahnrädern (15, 16) der Hauptwelle zusammenwirken, sowie eine Kupplungseinrichtung (17) besitzt, die über eine Stelleinrichtung derart schaltbar ist, daß die Leistungsübertragung in einem Schaltzustand der Kupplungseinrichtung (17) direkt über die beiden Wellen (7, 8) der Hauptwelle und in einem anderen Schaltzustand der Kupplungseinrichtung über die Zahnräder (15, 16, 22, 23) und die Zwischenwelle erfolgt, wobei die Kupplungseinrichtung eine Synchronisiereinrichtung (17) ist und die Stelleinrichtung von wenigstens einem Hydraulikzylinder (25) gebildet ist, dadurch gekennzeichnet, daß das Zwischengetriebe symmetrisch derart ausgebildet ist, daß dessen Antrieb und Abtrieb vertauschbar sind, d.h. das Zwischengetriebe wahlweise als Übersetzungsgetriebe oder Untersetzungsgetriebe einbaubar ist.

2. Getriebeanordnung nach Anspruch 1, dadurch gekennzeichnet, daß das Zwischengetriebe (7) zum Schalten eine Schaltwelle (20) aufweist, die in einem Gehäuse (14) des Zwischengetriebes (7) um einen vorgegebenen Hub verschiebbar ist, und daß die Schaltwelle (20) an wenigstens einem Ende einen Kolben (24) besitzt, der in einem Zylinder (25) der Stelleinrichtung verschiebbar ist.

3. Getriebeanordnung nach Anspruch 2, dadurch gekennzeichnet, daß die Schaltwelle (20) zur Bildung zweier Hydraulikzylinder beidendig jeweils einen in einem Zylinder (25) geführten Kolben (24) aufweist.

4. Getriebeanordnung nach einem der Ansprüche 1 - 3, dadurch gekennzeichnet, daß die Schaltstellungen des Zwischengetriebes (7) durch Einrasten wenigstens eines federnden Rastelementes (31, 32) in jeweils eine Gegenrast (34) fixiert sind.

5. Getriebeanordnung nach einem der Ansprüche 1 - 4, dadurch gekennzeichnet, daß das Zwischengetriebe (7) nur zwei Schaltstellungen besitzt, und zwar eine erste Schaltstellung, mit einem Übersetzungsverhältnis von Eins und eine zweite Schaltstellung mit einer Übersetzung kleiner oder größer als Eins.

6. Getriebeanordnung nach Anspruch 5, dadurch gekennzeichnet, daß die erste Schaltstellung einem Durchtrieb entspricht, vorzugsweise in der Form, daß die beiden Wellen (8, 9) antriebsmäßig unmittelbar miteinander verbunden sind.

7. Getriebeanordnung nach einem der Ansprüche 2 - 6, dadurch gekennzeichnet, daß zur Einstellung des Hubes der Schaltwelle (20) an dem wenigstens einem Kolben (24) ein über die Kolbenfläche vorstehender einstellbarer Anschlag vorgesehen ist, und daß dieser Anschlag von dem Kopf einer Schraube (29) gebildet ist.

8. Getriebeanordnung nach Anspruch 7, dadurch gekennzeichnet, daß zur Einstellung des Anschlags zwischen dem Kopf der Schraube (29) und einer benachbarten Fläche des Kolbens (24) in ihrer Anzahl und/oder Dicke unterschiedliche Scheiben (30) verwendet sind.

9. Getriebeanordnung nach einem der Ansprüche 1 - 8, dadurch gekennzeichnet, daß die Übersetzung des Zwischengetriebes (7) etwa dem halben Stufensprung des serienmäßigen Fahrgetriebes entspricht, beispielsweise zwischen 0,9 und 0,8, vorzugsweise 0,88 beträgt.

10. Getriebeanordnung nach einem der Ansprüche 1 - 9, gekennzeichnet durch wenigstens eine das Zwischengetriebe (7) mit dem Fahrgetriebe (2) und/oder mit dem Differential (6) verbindende Gelenkwelle (5, 35), die zusammen mit dem Zwischengetriebe einen an das Fahrzeug angepaßten Bau-bzw. Nachrüstsatz bildet.

11. Getriebeanordnung nach einem der Ansprüche 1 - 10, gekennzeichnet durch eine Drehmomentstütze zwischen dem Fahrgetriebe (2) und dem Zwischengetriebe (7), die vorzugsweise ebenfalls Bestandteil des Bausatzes ist.

12. Antrieb für motorgetriebene Straßenfahrzeuge, insbesondere für PKW, mit einer in einem Antriebsstrang zwischen Motor (1) und einem Differentialgetriebe (6) einer angetriebenen Achse (4) vorgesehenen Getriebeanordnung nach einem der Ansprüche 1 - 11.

**Claims**

1. Gearbox for engine-powered road vehicles, in particular passenger cars, with a drive line which exhibits a standard drive gear between the engine (1) and a differential gear (6) of a driven axle (4), whereby the gearbox exhibits, in addition to a drive gear (2), a selectable intermediate gear intended for subsequent installation, which has two shafts (8, 9), which are connected together in a pivoting manner by a bearing, for example by a fixed bearing or an adjusted bearing, and form a common, two-part main shaft, an intermediate shaft (21) with toothed wheels (22, 23) which cooperate with toothed wheels (15, 16) of the main shaft, and a coupling device (17), which is selectable via an adjusting device in such a way that the power transmission in one selected state of the coupling device (17) comes direct via the two shafts (7, 8) of the main shaft, and in another selected state of the coupling device, comes via the toothed wheels (15, 16, 22, 23) and the intermediate shaft, whereby the coupling device is a synchronising device (17) and the adjusting device is formed by at least one hydraulic cylinder (25), characterised in that the intermediate gear is designed symmetrically in such a way that its drive and output are exchangeable, i.e. the intermediate gear may as desired be fitted as the speed increasing or speed reduction gear.

2. Gearbox according to claim 1, characterised in that the intermediate gear (7) exhibits a selector shaft (20) for selection, which is movable by a prescribed stroke in a housing (14) of the intermediate gear (7), and that the selector shaft (20) has a piston (24) at least at one end, which is movable in a cylinder (25) of the adjusting device.

3. Gearbox according to claim 2, characterised in that the selector shaft (20) exhibits at both ends a piston (24) in a cylinder (25) to form two hydraulic cylinders.

4. Gearbox according to one of claims 1 - 3, characterised in that the selector positions of the intermediate gear (7) are each fixed in a counterlock (34) by engagement of at least one spring lock element (31, 32).

5. Gearbox according to one of claims 1 - 4, characterised in that the intermediate gear (7) only has two selection positions, the first with a transmission ratio of one and a second selection position with a transmission smaller or greater than one.

6. Gearbox according to claim 5, characterised in that the first selection position corresponds to a through drive, preferably in a form such that the transmissions of both shafts (8, 9) are directly connected to one another.

7. Gearbox according to one of claims 2 - 6, characterised in that to adjust the stroke of the selector shaft (20) an adjustable stop projecting above the surface of the piston surface is provided on at least one piston (24), and that this stop is formed by the head of a screw (29).

8. Gearbox according to claim 7, characterised in that to adjust the stop between the head of the screw (29) and an adjacent surface of the piston (24) different numbers and/or thicknesses of washers (30) are used.

9. Gearbox according to one of claims 1 - 8, characterised in that the gearing of the intermediate gear (7) corresponds to approximately half the progressive ratio of the standard drive gear, for example between 0.9 and 0.8, preferable 0.88.

10. Gearbox according to one of claims 1 - 9, characterised by at least one propeller shaft (5, 35) connecting the intermediate gear (7) with the drive gear (2) and/or with the differential (6), which, together with the intermediate gear, forms a kit or retrofit kit matched to the vehicle.

11. Gearbox according to one of claims 1 - 10, characterised by a torque support between the drive gear (2) and the intermediate gear (7), which is preferably also a component of the kit.

12. Transmission for engine-powered motor vehicles, in particular passenger cars, with a gearbox according to one of claims 1 - 11 in a drive line between the engine (1) and a differential gear (6) of a driven axle (4).

**Revendications**

1. Dispositif de transmission pour des véhicules routiers entraînés par moteur, plus particulièrement pour des voitures particulières, pourvu d'un système d'entraînement présentant une transmission standard entre le moteur (1) et un différentiel (6) d'un axe entraîné (4), le dispositif de transmission présentant, en plus d'une boîte de transmission (2), une transmission intermédiaire commutable et prévue pour le montage en aval qui possède deux arbres (8, 9) reliés l'un à l'autre de manière à pouvoir pivoter par un palier, par exemple un palier fixe ou un palier réglable et formant un arbre principal commun en deux parties, de même qu'un arbre intermédiaire (21) pourvu de pignons (22, 23) qui s'engrènent avec les pignons (15, 16) de l'arbre principal, ainsi qu'un dispositif de couplage (17) pouvant être commandé de telle manière par l'intermédiaire d'un dispositif de commande, que la transmission de puissance s'effectue, lorsque le dispositif de couplage (17) se trouve en une position de fonctionnement, directement par l'intermédiaire des deux arbres (8, 9) de l'arbre principal et, dans une autre position de fonctionnement du dispositif de couplage par les roues dentées (15, 16, 22, 23) et l'arbre intermédiaire, ledit dispositif de couplage (17) étant un dispositif de synchronisation et le dispositif de commande étant composé d'au moins un cylindre hydraulique (25), **caractérisé en ce que** la transmission intermédiaire est conçue symétriquement de telle manière que son entraînement et sa sortie peuvent être échangés, c'est-à-dire que l'entraînement intermédiaire peut être facultativement monté comme un multiplicateur ou un démultiplicateur.

2. Dispositif de transmission selon la revendication 1, caractérisé en ce que la transmission intermédiaire (7) présente, dans le but de changer les vitesses, un axe de levier de commande de changement de vitesse (20) pouvant coulisser sur une course prédéterminée dans un boîtier (14) de la transmission intermédiaire, et en ce que l'axe du levier de commande de changement de vitesse (20) possède du moins à une extrémité un piston (24) pouvant coulisser dans un cylindre (25) du dispositif de commande.

3. Dispositif de transmission selon la revendication 2, caractérisé en ce que l'axe du levier de commande de changement de vitesse (20) présente à ses deux extrémités un piston (24) introduit dans un cylindre (25) pour former deux cylindres hydrauliques.

4. Dispositif de transmission selon l'une ou l'autre des revendications 1 à 3, caractérisé en ce que les positions de commande de la transmission intermédiaire (7) sont fixées par l'encliquetage d'au moins un élément d'arrêt élastique (31, 32) dans une encoche d'arrêt opposée (34).

5. Dispositif de transmission selon l'une ou l'autre des revendications 1 à 4, caractérisé en ce que la transmission intermédiaire (7) ne possède que deux positions de fonctionnement, une première position avec un rapport de multiplication de 1 et une deuxième position avec une multiplication plus petite ou plus grande que 1.

6. Dispositif de transmission selon la revendication 5, caractérisé en ce que la première position de fonctionnement correspond à une prise directe, préférentiellement de telle manière que les deux arbres (8,9) sont directement connectés l'un à l'autre pour l'entraînement.

7. Dispositif de transmission selon l'une ou l'autre des revendications 2 à 6, caractérisé en ce que pour régler la course de l'axe du levier de commande de changement de vitesse (20) est prévue sur au moins un piston (24) une butée réglable et faisant saillie au-dessus de la surface du piston et en ce que ladite butée est formée par la tête d'un boulon (29).

8. Dispositif de transmission selon la revendication 7 caractérisé en ce que dans le but de régler la butée sont utilisés entre la tête du boulon (29) et une surface voisine du piston (24) des disques (30) dont le nombre et/ou l'épaisseur diffère(nt).

9. Dispositif de transmission selon l'une ou l'autre des revendications 1 à 8, caractérisé en ce que la démultiplication de la transmission intermédiaire (7) correspond environ à la moitié du rapport de la transmission standard pour atteindre par exemple entre 0,9 et 0,8, préférentiellement 0,88.

10. Dispositif de transmission selon l'une ou l'autre des revendications 1 à 9 caractérisé par au moins un arbre de transmission à joints de cardan (5, 35) reliant la transmission intermédiaire (7) à la boîte de transmission (2) et/ou au différentiel (6), qui avec la transmission intermédiaire forme un ensemble de montage ou un jeu d'accessoires adapté au véhicule.

11. Dispositif de transmission selon l'une ou l'autre des revendications 1 à 10 caractérisé par un support de couple entre la boîte de transmission (2) et la transmission intermédiaire (7) qui constitue aussi préférentiellement une composante du jeu.

12. Transmission cour véhicules routiers entraînés par moteur, plus particulièrement pour voitures particulières, pourvue d'un dispositif d'entraînement selon l'une des revendications 1 à 11 prévu dans le système d'entraînement entre le moteur (1) et le différentiel (6).

FIG. 1

FIG. 5

FIG. 6

## FIG. 2

FIG. 3

FIG. 4

EP 0 647 191 B1